# EUROPÄISCHE PATENTSCHRIFT

(11) **EP 2 527 702 B1**
(45) Veröffentlichungstag und Bekanntmachung des Hinweises auf die Patenterteilung: **04.12.2019**
(21) Anmeldenummer: 12001338.8
(22) Anmeldetag: 29.02.2012
(51) Int. Cl.: F16L 53/00

(54) **FLUIDLEITUNG**
FLUID CONDUIT
CONDUITE DE FLUIDE

(30) Priorität: 20.05.2011 DE 102011102151
(43) Veröffentlichungstag der Anmeldung: 28.11.2012
(73) Patentinhaber: NORMA Germany GmbH, 63477 Maintal (DE)
(72) Erfinder: Eckardt, Carsten, 63486 Bruchköbel (DE); Mann, Stephan, 63599 Biebergemünd (DE); Rastetter, Marc, 63599 Biebergemünd (DE); Read, Cameron, Docklands Vic 3008 (AU); Seibel, Knut, 63674 Altenstadt (DE)
(74) Vertreter: Patentanwälte Olbricht Buchhold Keulertz

(56) Entgegenhaltungen:
- EP-A2- 0 068 688
- EP-A2- 1 070 642
- DE-A1- 3 414 284

## Beschreibung

Die Erfindung betrifft eine Fluidleitung mit einem Rohr, einem Verbinder, der einen Anschlussstutzen aufweist und der an einem Ende des Rohres angeordnet ist, und einer Heizeinrichtung, die im Inneren des Rohres angeordnet und als Heizstab ausgebildet ist, der aus dem Rohr in den Anschlussstutzen des Verbinders geführt ist und durch eine Öffnung aus dem Verbinder herausgeführt ist.

Die Erfindung wird im Folgenden anhand einer Fluidleitung beschrieben, die in einem Kraftfahrzeug dazu verwendet wird, Harnstoff oder UREA von einem Tank zu einer Verbrauchsstelle, beispielsweise einer Pumpe, zu leiten. Harnstoff wird bei Dieselmotoren verwendet, um die Stickoxide zu reduzieren.

Bei niedrigen Außentemperaturen unterhalb von -11°C besteht die Gefahr, dass der Harnstoff in der Fluidleitung einfriert und somit eine Förderung des Harnstoffs durch die Leitung nicht mehr möglich ist. Bei anderen Flüssigkeiten können die Gefrierpunkte andere Werte haben. Bei einem Einfrieren der Flüssigkeit ist auf jeden Fall ein Transport der Flüssigkeit durch die Fluidleitung nicht mehr möglich.

Man hat daher vorgeschlagen, die Fluidleitung und gegebenenfalls auch den Verbinder zu beheizen. Eine Möglichkeit hierzu besteht darin, einen Heizdraht um das Rohr und um den Verbinder zu wickeln, der, wenn er mit einer entsprechenden Stromstärke beschickt wird, Wärme erzeugt, die durch das Rohr auf die im Inneren des Rohres befindliche Flüssigkeit übertragen werden kann. Eine derartige Ausgestaltung hat jedoch den Nachteil, dass die Heizeinrichtung dem Risiko einer Beschädigung durch äußere Einflüsse ausgesetzt ist. Zudem wird ein Großteil der durch die Heizeinrichtung erzeugten Wärme nicht auf die Flüssigkeit im Inneren des Rohres übertragen, sondern strahlt nach außen ab.

Ein anderer Vorschlag besteht darin, einen Heizleiter flächig auszubilden und diesen schraubenlinienförmig zu formen und dann im Inneren des Rohres anzuordnen. Hier steht zwar eine relativ große Fläche für die Wärmeübertragung von der Heizeinrichtung an die Flüssigkeit zur Verfügung. Ein Flächenheizleiter ist jedoch sehr empfindlich und kann bereits bei der Montage beschädigt werden. Darüber hinaus ist es relativ schwierig, die elektrische Energie, die für die Erzeugung der Wärme benötigt wird, zum Heizleiter zu bringen.

Eine andere technische Anwendung einer derartigen Fluidleitung ist in EP 1 070 642 A2 beschrieben. Dieses Dokument zeigt eine Heizvorrichtung für eine Scheibenwischanlage. Die Vorrichtung weist eine Fluidleitung mit einem Rohr und einen an einem Ende des Rohres angeordneten Verbinder mit einem Anschlussstutzen auf. Weiterhin ist im Inneren des Rohres ein Heizleiter vorgesehen, der aus dem Rohr in den Anschlussstutzen des Verbinders geführt ist und durch eine Öffnung aus dem Verbinder herausgeführt ist. Die Abdichtung der Öffnung des Verbinders gegen die transportierte Flüssigkeit geschieht durch einen elastischen konischen Dichtstopfen, der zwei durchgehende Öffnungen für die Aufnahme der Stränge des Heizleiters aufweist und der in einen korrespondierenden volumenkleineren endseitigen Stutzen des Verbinders eingesetzt ist. Der Dichtstopfen wird zwecks seiner sicheren Positionierung im endseitigen Stutzen mit einem mit dem Verbinder verrastenden Abdeckelement fixiert.

EP 0 068 688 A2 zeigt einen Verbinder für einen Heizleiter in einer Fluidleitung, der einen Anschlussstutzen aufweist, der in die Fluidleitung einsetzbar ist, sowie einen weiteren Stutzen, in dem sich eine Kammer befindet, die den Heizleiter aufnimmt. In der Kammer wird der Heizleiter elektrisch mit einem Anschlusskabel kontaktiert, das aus der Öffnung des Verbinders an dem Stutzen herausgeführt wird. Die elektrischen Anschlüsse des Heizleiters an das Kabel sind in der Kammer in eine elektrisch isolierende, treibstoff- und wasserabweisende Masse vergossen.

EP 1 070 642 A2 zeigt eine Heizvorrichtung für eine Scheibenwischanlage und weist eine Fluidleitung mit einem Rohr und einen an einem Ende des Rohres angeordneten Verbinder mit einem Anschlussstutzen auf. Im Inneren des Rohres ist ein Heizleiter vorgesehen, der aus dem Rohr in den Anschlussstutzen des Verbinders geführt ist und durch eine Öffnung aus dem Verbinder herausgeführt ist. Die Abdichtung der Öffnung des Verbinders gegen die transportierte Flüssigkeit geschieht durch einen elastischen konischen Dichtstopfen.

DE 34 14 284 A1 zeigt einen Anschlusskopf mit einem eine Hin- und Rückleitung aufweisenden Heizleiter für Rohrleitungen. Der Heizleiter ist aus einer Öffnung des Anschlusskopfes herausgeführt. Zur Abdichtung wird ein elastischer Doppelkegel eingesetzt, der durch Wirkung einer Überwurfmutter mithilfe eines äußeren und eines inneren Einsatzes verspannt wird und dadurch eine Abdichtung zwischen der Öffnung und dem Heizleiter hervorruft.

Der Erfindung liegt die Aufgabe zugrunde, eine Fluidleitung bereitzustellen, die eine einfache fluiddichte Abdichtung der Öffnung des Verbinders, aus der der Heizstab aus dem Verbinder herausgeführt ist, aufweist.

Diese Aufgabe wird bei einer Fluidleitung der eingangs genannten Art dadurch gelöst, dass die Öffnung durch eine Ringdichtung abgedichtet ist, die am Heizstab anliegt und die durch einen Stopfen im Verbinder fixiert ist.

Die Ausbildung als Heizstab verleiht der Heizeinrichtung eine gewisse mechanische Stabilität und Belastbarkeit. Dementsprechend ist das Risiko, dass die Heizeinrichtung beim Einführen in das Rohr und in den Verbinder beschädigt wird, relativ gering. Dadurch, dass der Heizstab aus dem Rohr in den Stutzen des Verbinders geführt ist, ist es möglich, die Flüssigkeit nicht nur in dem Rohr zu beheizen, sondern auch in dem Teil des Verbin ders, in dem der Heizstab angeordnet ist. Der Begriff "Rohr" ist hier nicht auf starre Rohre begrenzt. Er kann auch einen Schlauch oder eine andere verform- oder biegbare Leitung umfassen. Da der Heizstab durch eine von einem Stutzen gebildete Öffnung aus dem Verbinder herausgeführt ist, ist es möglich, die elektrischen Anschlüsse außerhalb des Verbinders herzustellen. Damit sind diese Anschlüsse von außen relativ leicht zugänglich und können nach der Herstellung und im Einbauzustand überwacht werden. Die Herstellung der Fluidleitung wird dadurch relativ einfach.

Die Öffnung ist durch eine Ringdichtung abgedichtet, die am Heizstab anliegt. Die Ringdichtung kann beispielsweise durch einen O-Ring aus einem elastomeren Material gebildet sein. Die Abdichtung der Öffnung durch die Ringdichtung verhindert, dass Fluid aus der Fluidleitung dort austritt, wo auch der Heizstab aus dem Verbinder herausgeführt ist.

Es ist ein Stopfen vorgesehen, der die Ringdichtung im Verbinder festhält. Im Innern der Fluidleitung herrscht üblicherweise ein etwas erhöhter Druck. Hier besteht ohne zusätzliche Maßnahmen die Gefahr, dass dieser Druck die Ringdichtung aus der Öffnung herausdrückt, was zu einer Undichtigkeit führen würde. Die Verwendung eines Stopfens ist eine relativ einfache Maßnahme, um die Ringdichtung an dem gewünschten Ort festzuhalten.

Vorzugsweise weist der Heizstab eine Kunststoffmasse auf, in die mindestens ein Heizleiter eingebettet ist. Der Kunststoff kann beispielsweise extrudiert werden, wobei der Heizleiter bei der Extrusion gleich mit in die Kunststoffmasse eingelegt wird. Wenn die Kunststoffmasse dann ausgehärtet ist, ist der Heizleiter im Innern des Heizstabes aufgenommen und durch die Kunststoffmasse gegen äußere Einflüsse geschützt. Die Kunststoffmasse muss natürlich gegen die in der Fluidleitung fließende Flüssigkeit beständig sein.

Vorzugsweise ist der Heizstab biegbar ausgebildet. Er kann also auch einer Fluidleitung folgen, die eine oder mehrere Richtungsänderungen aufweist. Durch die Biegbarkeit des Heizstabes muss man den Heizstab nicht von vornherein mit dem gleichen Verlauf ausbilden, wie die Fluidleitung auch. Der Heizstab kann vielmehr von einem Ende der Fluidleitung eingeführt werden und aufgrund seiner Biegbarkeit vollständig durch das Rohr hindurchgeführt werden

Vorzugsweise ist die Dichtung von außen an den Verbinder angesetzt. Dies erleichtert die Handhabung. Man kann zunächst den Heizstab in den Verbinder einführen und durch die Öffnung austreten lassen. Wenn der Heizstab weit genug aus der Öffnung herausgetreten ist, so dass man hier Anschlüsse oder dergleichen herstellen kann, wird die Dichtung auf den Heizstab aufgesetzt und am Heizstab entlang bis zu der Öffnung am Verbinder geführt. Wenn die Dichtung sowohl am Heizstab als auch am Verbinder anliegt, ist eine fluiddichte Öffnung geschaffen.

Der Stopfen ist in einem Stutzen angeordnet, durch den der Heizstab aus dem Verbinder nach außen geführt ist. Der Stutzen ist beispielsweise zylinderförmig ausgebildet und weist eine gewisse Länge auf, so dass der Stopfen hier eingesetzt werden kann und mit ausreichender Kraft festhält.

Erfindungsgemäß ist der Stopfen mit dem Verbinder verrastet. Durch das Verrasten ergibt sich ein Formschluss, der den Stopfen im Verbinder festhält und damit in der
Lage ist, auch größeren auf die Ringdichtung wirkenden Drücken zu widerstehen.

Der Stopfen ist an seiner·freien Stirnseite mit zwei Nuten versehen. Diese Nuten können beispielsweise dafür verwendet werden, einen elektrischen Leiter zu führen, der zum Heizstab führt. Der elektrische Leiter ist damit kurz vor der Verbindung mit dem Heizstab durch den Stopfen jedenfalls teilweise gegen mechanische Beschädigungen geschützt.

Erfindungsgemäß verlaufen die Nuten radial und münden außerhalb einer zum Verrasten des Stopfens mit dem Verbinder dienenden Rastgeometrie in eine Umfangswand des Stopfens. Damit stören die Nuten und ein möglicherweise darin befindlicher Leiter die Verrastung des Stopfens mit dem Verbinder nicht. Gleichwohl kann der Stopfen verwendet werden, um den elektrischen Leiter zu schützen.

Bevorzugterweise begrenzt der Stopfen einen Dichtungsraum, der in eine Richtung parallel zum Heizstab eine Erstreckung aufweist, die mindestens der Dicke der Ringdichtung in diese Richtung entspricht. Damit wird die Ringdichtung durch den Stopfen nicht verpresst. Der Stopfen hat eine reine Haltefunktion. Eine Formänderung der Ringdichtung kann allenfalls durch den im Innern der Fluidleitung herrschenden Druck erfolgen, der die Ringdichtung dann gegen den Stopfen drückt. Wenn die Ringdichtung parallel zur Längserstreckung des Heizleiters zusammengedrückt wird, dann legt sie sich dichter nach innen an den Heizleiter und nach außen an die Innenwand des Stutzens an.

Die Erfindung wird im Folgenden anhand von bevorzugten Ausführungsbeispielen in Verbindung mit der Zeichnung beschrieben. Hierin zeigen:
- Fig. 1: ein erstes Ausführungsbeispiel einer Fluidleitung mit einem Verbinder,
- Fig. 2: einen Schnitt II-II nach Fig. 1,
- Fig. 3: einen Stopfen in perspektivischer vergrößerter Darstellung,
- Fig. 4: eine zweite Ausführungsform einer Fluidleitung mit einer abgewandelten Form eines Verbinders,
- Fig. 5: einen Schnitt IV-IV nach Fig. 4 und
- Fig. 6: einen Schnitt durch einen Heizstab.

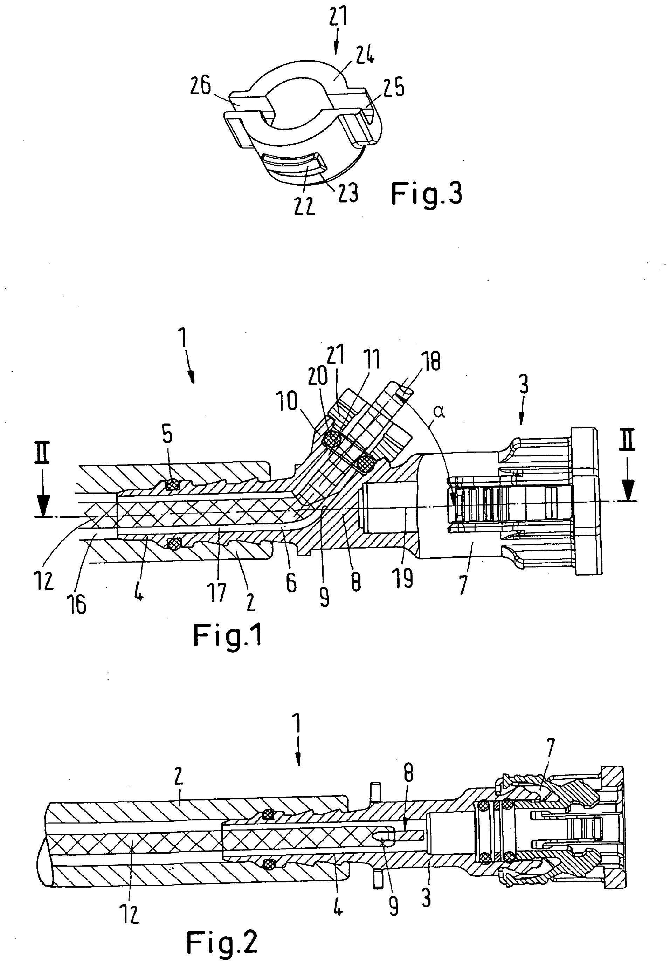

Fig. 1 zeigt eine Fluidleitung 1 mit einem Rohr 2 und einem Verbinder 3, der einen Anschlussstutzen 4 aufweist, auf dem das Rohr 2 aufgeschoben ist. Das Rohr 2 kann mit nicht näher dargestellten Spannmitteln noch auf dem Anschlussstutzen 4 befestigt werden, beispielsweise mit einer Schlauchschelle. Der Anschlussstutzen 4 weist eine "Tannenbaum"-Geometrie auf. Zusätzlich kann ein Dichtring 5 zwischen dem Rohr 2 und dem Anschlussstutzen 4 vorgesehen sein.

Das Rohr 2 ist aus einem Kunststoff gebildet. Das Rohr 2 ist flexibel. Es kann auch als schlauchartige Leitung ausgebildet sein.

Der Verbinder weist einen geradlinig verlaufenden Durchgangskanal 6 auf, der den Anschlussstutzen 4 durchsetzt und bis zu einer Anschlussgeometrie 7 geführt ist, mit deren Hilfe der Verbinder 3 an einem Stutzen eines Tanks, einer Pumpe oder eines anderen Verbinders befestigt werden kann. Die genaue Ausbildung der Anschlussgeometrie 7 spielt für den vorliegenden Fall keine Rolle. Sie ist aber so ausgebildet, dass sie eine mechanisch stabile und fluiddichte Verbindung ermöglichen kann.

Im Durchgangskanal 6 ist ein Rampenelement 8 angeordnet, das eine Führungsfläche 9 aufweist, deren Zweck weiter unten beschrieben wird.

Der Verbinder 3 weist einen Stutzen 10 auf, der eine Öffnung 11 bildet.

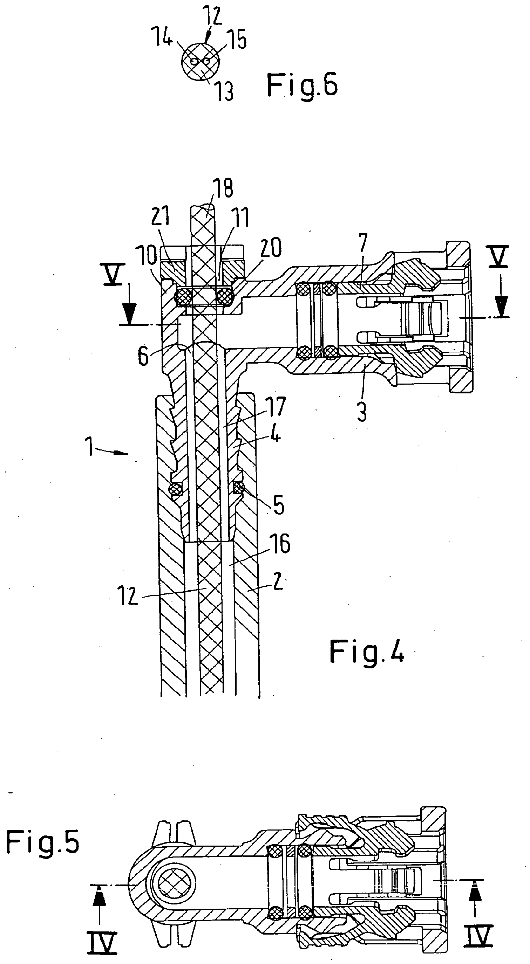

Im Rohr 2 ist ein Heizmittel in Form eines Heizstabs 12 angeordnet. Der Heizstab_12 ist, wie dies in Fig. 6 zu erkennen ist, aus einem Kunststoff 13 gebildet, in dem zwei Heizleiter 14, 15 angeordnet sind. Der Heizstab 12 ist biegbar. Die Heizleiter 14, 15 sind mechanisch geschützt im Innern des Heizstabs 12 aufgenommen. Zwischen dem Heizstab 12 und dem Rohr 2 ist ein Ringraum 16 gebildet, durch den eine Flüssigkeit strömen kann. Auch zwischen dem Anschlussstutzen 4 und dem Heizstab 12 ist ein Ringraum 17 gebildet. Der Ringraum 17 hat eine etwas kleinere Querschnittsfläche als der Ringraum 16 zwischen dem Heizstab 12 und dem Rohr 2. Diese kleinere Querschnittsfläche reicht aber immer noch aus, um eine ausreichende Menge an Flüssigkeit durch die Fluidleitung 1 strömen zu lassen. Das mit dem kleineren Querschnitt verbundene kleinere Volumen hat aber den Vorteil, dass hier auch nur eine kleinere Menge an Flüssigkeit einfrieren kann, so dass ein Auftauvorgang (bei gleicher Wärmezufuhr) schneller ablaufen kann als bei einem größeren aufzutauenden Volumen. Darüber hinaus kann ein kleineres Flüssigkeitsvolumen beim Einfrieren nur eine geringere Volumenvergrößerung erfahren, so dass die Beanspruchung des Verbinders 3 beim Einfrieren der Flüssigkeit geringer gehalten werden kann.

Wenn der Heizstab in den Anschlussstutzen 4 eingeschoben wird, dann gelangt seine Spitze 18 auf die Führungsfläche 9 und wird von der Führungsfläche 9 des Rampenelements 8 abgelenkt und zwar in den Stutzen 10 zur Öffnung 11 hin. Wenn der Heizstab 12 weitergeschoben wird, dann tritt er durch die Öffnung 11 aus dem Stutzen 10 aus, wie dargestellt. Der Stutzen 10 steht unter einem Winkel α zur Längsachse 19 des Durchgangskanals 6. Dieser Winkel liegt vorzugsweise im Bereich von 20° bis 80°.

In der Öffnung 11 ist zwischen der Innenwand des Stutzens 10 und dem Heizleiter 12 eine Ringdichtung 20 angeordnet. Die Ringdichtung 20 liegt (radial nach außen) dichtend an der Innenseite des Stutzens 10 an und (radial nach innen) dichtend am Heizleiter 12. Die Ringdichtung 20 wird auf den Heizstab 12 aufgesetzt, wenn er aus der Öffnung 11 ausgetreten ist, und dann in die Öffnung 11 eingesetzt. Dabei kann die Ringdichtung 20 nach radial innen und nach radial außen geringfügig komprimiert werden.

Im Innern der Fluidleitung 1 kann ein erhöhter Druck von beispielsweise 6 bar auftreten. Bei einem derartigen Druck besteht die Gefahr, dass die Ringdichtung 20 aus der Öffnung 11 herausgedrückt wird. Um dies zu verhindern, ist ein Stopfen 21 in den Stutzen 10 eingesetzt, der die Ringdichtung 20 im Verbinder 3 festhält. Der Stopfen 21 ist in Fig. 3 vergrößert dargestellt. Er weist zwei einander diametral gegenüberliegende Rastnasen 22 (nur eine ist erkennbar) auf seiner radialen Außenseite auf. Diese Rastnasen 22 können in entsprechende Rastvertiefungen am Stutzen 10 (nicht dargestellt) eintreten, so dass der Stopfen 21 im Stutzen 10 formschlüssig gehalten ist. Zweckmäßigerweise weisen hierzu die Rastnasen 22 angeschrägte Anlaufflächen 23 auf.

An seiner axialen Außenseite 24, also der Seite, durch die der Heizstab 18 nach außen tritt, weist der Stopfen 21 zwei radial verlaufende Nuten 25, 26 auf, durch die beispielsweise elektrische Anschlüsse für den Heizstab 12 geführt werden können. Diese Nuten 25, 26 münden außerhalb einer zum Verrasten des Stopfens 21 mit dem Verbinder 3 dienenden Rastgeometrie, nämlich den Rastnasen 22, in die Umfangswand des Stopfens 21. Wenn also Anschlussdrähte herausgeführt werden, dann stören diese die Befestigung des Stopfens 21 im Stutzen 10 des Verbinders 3 nicht.

Der Stopfen 21 verpresst die Ringdichtung 20 nicht. Für die Ringdichtung 20 ist also ein Dichtungsraum vorgesehen, der jedenfalls in eine Richtung parallel zur Längserstreckung des Heizstabes 12 eine Erstreckung aufweist, die mindestens der Dicke der Ringdichtung 20 in diese Richtung entspricht. Der Stopfen 21 hat also lediglich die Funktion, die Ringdichtung 20 an Ort und Stelle zu halten.

Die Ringdichtung 20 ist allerdings so ausgebildet, dass sie sich radial nach innen und nach außen ausdehnen möchte, wenn sie axial mit einem Druck beaufschlagt wird. Wenn also der Druck im Innern der Fluidleitung 1 ansteigt, dann wird die Ringdichtung 20 gegen den Stopfen 21 gedrückt und legt sich aufgrund der damit verbundenen Ausdehnung nach radial innen und nach radial außen mit einer größeren Kraft an die Innenseite des Stutzens 10 und an die Außenseite des Heizstabes 12 an. Dadurch wird die Dichtigkeit der Fluidleitung auch im Bereich des Verbinders 3 und vor allem im Bereich der Öffnung 11, durch die der Heizstab 12 nach außen geführt ist, aufrechterhalten.

Die Fig. 4 und 5 zeigen eine abgewandelte Ausgestaltung, wobei Fig. 5 einen Schnitt V-V nach Fig. 4 und Fig. 4 einen Schnitt IV-IV nach Fig. 5 darstellt. Gleiche und funktionsgleiche Elemente wie in den Fig. 1 bis 3 sind mit den gleichen Bezugszeichen versehen.

Während in der Ausführungsform nach Fig. 1 und 2 der Durchgangskanal 6 eine gestreckte Form hat (die auch als 0°-Durchgang bezeichnet wird), ist der Durchgangskanal 6 in den Fig. 4 und 5 abgewinkelt, d.h. er weist eine 90°-Umlenkung auf.

Dementsprechend ist es hier möglich, den Heizstab 12 geradlinig durch den Verbinder 3 hindurchzuführen, so dass er durch den Anschlussstutzen 4 eintritt und geradlinig durch die Öffnung 11 austreten kann, ohne dass er durch irgendwelche weiteren Maßnahmen umgelenkt werden muss.

Auch hier ist im Stutzen 10 eine Ringdichtung 20 angeordnet, die auf den Heizstab 12 aufgeschoben ist und mit einer gewissen Vorspannung zwischen dem Stutzen 10 und dem Heizstab 12 sitzt. Auch diese Ringdichtung 20 wird durch den Stopfen 21 im Stutzen 10 festgehalten. Es kann hier der gleiche Stopfen 21 wie bei der Ausgestaltung nach Fig. 1 und 2 verwendet werden.

## Patentansprüche

1. Fluidleitung mit einem Rohr (2), einem Verbinder (3), der einen Anschlussstutzen (4) aufweist und der an einem Ende des Rohres (2) angeordnet ist, und einer Heizeinrichtung, die im Innern des Rohres (2) angeordnet ist, und als Heizstab (12) ausgebildet ist, der aus dem Rohr (2) in den Anschlussstutzen (4) des Verbinders (3) geführt ist und durch eine von einem Stutzen (10) gebildete Öffnung (11) aus dem Verbinder (3) herausgeführt ist und die Öffnung (11) durch eine Ringdichtung (20) abgedichtet ist, die am Heizstab (12) anliegt und die durch einen Stopfen (21) im Verbinder (3) fixiert ist, **dadurch gekennzeichnet, dass** der Stopfen (21) an seiner freien Stirnseite (24) zwei radial verlaufende Nuten (25, 26) aufweist, die außerhalb einer zum Verrasten des Stopfens (21) mit dem Verbinder (3) dienenden Rastgeometrie (22) in eine Umfangswand des Stopfens (21) münden und wobei die Rastgeometrie (22) zwei diametral gegenüberliegende Rastnasen (22) aufweist, die in entsprechende Rastvertiefungen am Stutzen (10) eintreten, so dass der Stopfen (21) formschlüssig in dem Stutzen (10) gehalten wird.

2. Fluidleitung nach Anspruch 1, **dadurch gekennzeichnet, dass** der Heizstab (12) eine Kunststoffmasse (13) aufweist, in die mindestens ein Heizleiter (14, 15) eingebettet ist.

3. Fluidleitung nach Anspruch 1 oder 2, **dadurch gekennzeichnet, dass** der Heizstab (12) biegbar ausgebildet ist.

4. Fluidleitung nach Anspruch 1, **dadurch gekennzeichnet, dass** die Ringdichtung (20) von außen an den Verbinder (3) angesetzt ist.

5. Fluidleitung nach einem der vorhergehenden Ansprüche, **dadurch gekennzeichnet, dass** der Stopfen (21) einen Dichtungsraum begrenzt, der in eine Richtung parallel zum Heizstab (12) eine Erstreckung aufweist, die mindestens der Dicke der Ringdichtung (20) in diese Richtung entspricht.

## Claims

1. Fluid line with a pipe (2), a connector (3) which has a pipe connection (4) and is arranged at one end of the pipe (2), and a heater apparatus which is arranged inside the pipe (2) and is designed as a heater rod (12) which is guided out of the pipe (2) into the pipe connection (4) of the connector (3) and is guided out of the connector (3) through an opening (11) formed by a connecting piece (10) and the opening (11) is sealed by an annular seal (20) which bears against the heater rod (12) and which is fixed by a plug (21) in the connector (3), **characterised in that** the plug (21) at its free end face (24) has two radial grooves (25, 26) which outside a locking geometry (22) for locking the plug (21) to the connector (3) open into a circumferential wall of the plug (21) and wherein the locking geometry (22) has two diametrically opposite locking noses (22) which enter into corresponding locking recesses on the connecting piece (10) so that the plug (21) is held in a form-fitting manner in the connecting piece (10).

2. Fluid line according to claim 1, **characterised in that** the heater rod (12) has a plastic moulding compound (13) into which at least one heating conductor (14, 15) is embedded.

3. Fluid line according to claim 1 or 2, **characterised in that** the heater rod (12) is designed to be bendable.

4. Fluid line according to claim 1, **characterised in that** the annular seal (20) is attached from the outside onto the connector (3).

5. Fluid line according to any of the preceding claims, **characterised in that** the plug (21) delimits a sealing chamber which has an extension in a direction parallel to the heater rod (12) which corresponds at least to the thickness of the annular seal (20) in this direction.

## Revendications

1. Conduite pour fluide comportant un tube (2), un connecteur (3) présentant une tubulure de raccordement (4) et agencé à une extrémité du tube (2), et un dispositif de chauffage agencé à l'intérieur du tube (2) et est réalisé sous la forme d'une baguette chauffante (12) guidée depuis le tube (2) jusque dans la tubulure de raccordement (4) du connecteur (3) et guidée hors du connecteur (3) grâce à une ouverture (11) formée par un raccord (10) et l'ouverture (11) est rendue étanche grâce à un joint torique (20) qui appuie sur la baguette chauffante (12) et est fixé dans le connecteur (3) grâce à un bouchon (21), **caractérisée en ce que** le bouchon (21) présente au niveau de sa face terminale (24) deux rainures (25, 26) qui s'étendent de manière radiale et débouchent dans une paroi périphérique du bouchon (21) au-delà d'une géométrie de verrouillage (22) servant au blocage du bouchon (21) avec le connecteur (3) et dans laquelle la géométrie de verrouillage (22) présente deux ergots de verrouillage (22) diamétralement opposés qui rentrent dans des gorges de verrouillage correspondantes situées au niveau du raccord (10), de sorte que le bouchon (21) est maintenu dans le raccord (10) par complémentarité de forme.

2. Conduite pour fluide selon la revendication 1, **caractérisée en ce que** la baguette chauffante (12) présente une masse de plastique (13) au sein de laquelle est plongé au moins un conducteur chauffant (14, 15).

3. Conduite pour fluide selon la revendication 1 ou 2, **caractérisée en ce que** la baguette chauffante (12) est réalisée de manière à pouvoir être pliée.

4. Conduite pour fluide selon la revendication 1, **caractérisée en ce que** le joint torique (20) est mis en place sur le connecteur (3) depuis l'extérieur.

5. Conduite pour fluide selon l'une quelconque des revendications précédentes, **caractérisée en ce que** le bouchon (21) délimite un espace d'étanchéité présentant dans une direction parallèle à la baguette chauffante (12) une extension qui correspond au moins à l'épaisseur du joint torique (20) dans ladite direction.
